# EUROPEAN PATENT APPLICATION

(11) **EP 1 167 090 A2**
(43) Date of publication of application: **02.01.2002**
(21) Application number: 00127735.9
(22) Date of filing: 18.12.2000
(51) Int. Cl.: B60C 27/08

(54) **Improved connecting element for snow chains and snow chain obtained therewith**

(30) Priority: 08.06.2000 IT MI000353 U
(71) Applicant: MAGGI CATENE S.p.A., 22057 Olginate (Lecco) (IT)
(72) Inventor: Maggi, Corrado, 23896 Sirtori (Lecco) (IT)
(74) Representative: Faggioni, Carlo Maria, Dr. Ing.

(57) **Abstract**

The present invention relates to a connecting element for snow chains, comprising a body portion (1) which can be fixed to a mounting cable and a hook (2) freely rotatable in said body portion, said body portion consisting of a plate closed onto itself, along a folding axis, around said cable and provided with at least one raised band (1b) and a slit or recess (1c) for loosely receiving, respectively, a straight shank portion of said hook and an enlarged head (2a) of said hook.

## Description

The present invention relates to an improved connecting element for snow chains and a snow chain provided with this element. In particular it relates to a connecting element of the "swivel" type, i.e. provided with a freely rotating hook.

As is known, in snow chains for tyres, various connecting elements are used and have many forms depending on the function which they must perform.

In particular, the connection between various chains portions, typically at the intersection between the inner or outer ring and the transverse sections of the gripping assembly, is effected in modern snow chains by means of swivelling hooks which have the possibility of freely rotating about at least their longitudinal axis of rotation. This enables, advantageously, the links attached to this connecting element to be freely oriented at angles which allow an improved adherence and functionality of the snow chain to be achieved with respect to the tyre surface and the snow-covered surface. In fact, if the chain links have the possibility of being oriented at about 45° with respect to the bearing surface on the tyre or on the road surface, they all offer simultaneously one side towards the friction surface; if this possibility does not exist, only one link in two is able to contribute towards the gripping action.

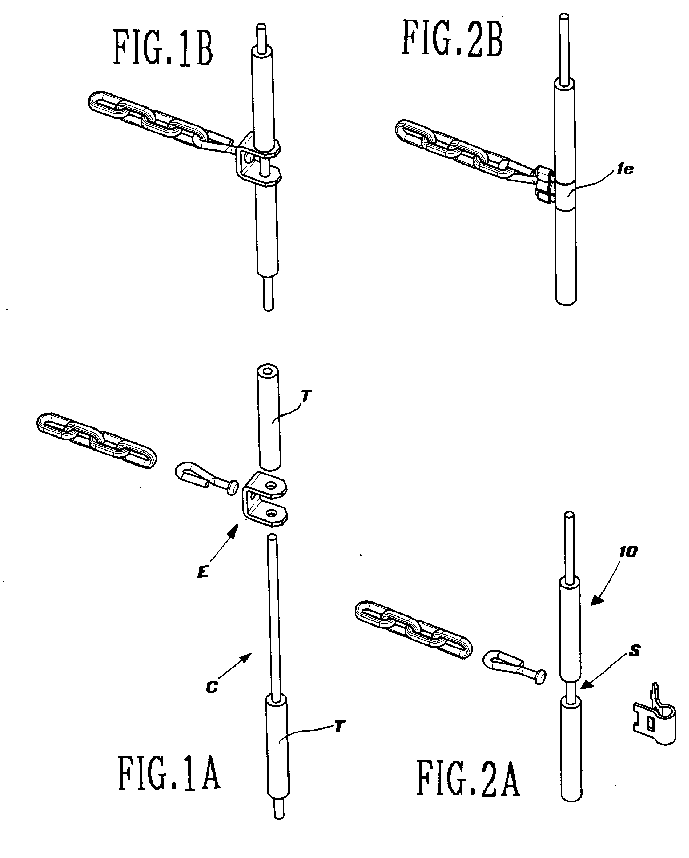

A typical example of the known art is illustrated in Fig. 1, which shows a partial view of the assembly diagram of a connecting element according to the known art to a mounting cable.

According to the known art, the swivel-type connecting element E consists of a metallic U-piece which has a hole on the central body portion, into which a stud bent in the manner of a hook and with a wide head is inserted, and two holes aligned on the two arm portions and intended for securing the U-piece to the inner anchoring cable C. The latter is composed of a single-wire semi-rigid cable which is usually made of steel and onto which are fitted, in succession, a plastic tube T (with a protective and spacing function), the U-piece with the swivelling hook, another plastic tube and so on until the entire ring has been completed (about 9 or 10 connecting elements over the whole circumference). Obviously the assembly operation is laborious and costly.

Therefore, the connecting swivels known hitherto are used in particular at the joining ends of the anchoring cables, where it is more convenient to fit them, or in other very specific conditions.

This type of known swivel element, moreover, cannot be used in any way with the modern anchoring cables in which the cable is formed by a core of metallic strands onto which a plastic lining is extruded. Normally, at the points where the transverse chain sections are attached, this type of cable is stripped of the plastic lining so as to allow the fastening thereto, by means of plastic deformation, of fixed U-shaped connecting elements which do not allow the free rotation of the links connected thereto. Unfortunately the swivel elements of the known art cannot be mounted onto this type of cable which will be referred to below as a "strippable" cable.

The object of the present invention is to provide a swivel-type connecting element for snow chains which can be easily mounted also onto a cable of the "strippable" type.

According to another aspect, a further object of the present invention is to provide an improved snow chain which is provided with swivel elements which can be secured onto a "strippable" cable and which is easy and inexpensive to manufacture.

These objects are achieved, according to the invention, by means of a swivel element and a snow chain made with said swivel element as described in essential terms in the accompanying independent claims.

Further details and characteristic features of the connecting element and the snow chain according to the invention will appear more clearly from the following description, in conjunction with the accompanying drawings in which:

Figs. 1A and 1B, are schematic perspective views of an inner cable portion C and a swivel element E of the known art, showing the assembly diagram thereof;

Figs. 2A and 2B are views similar to that of Figs. 1A and 1B, showing a portion of an inner "strippable" cable and a swivel element according to the invention;

Fig. 3 is a perspective partial view of a tyre portion on which a snow chain provided with swivel elements according to the invention is mounted;

Fig. 4 is a perspective view of a single swivel element according to the invention;

Figs. 5A and 5B are, respectively, a front elevation and perspective view of the body portion of the swivel element according to Fig. 4 before being folded;

Fig. 6 is a perspective view of a double swivel element according to the invention; and

Fig. 7 is a perspective view of the body portion of the swivel element according to Fig. 6 before being folded.

A swivel connecting element is composed of a body portion 1 and a hook with an enlarged head 2.

According to the invention, the body portion 1 is in the form of plate 1a in which one or more strips or bands 1b and one or more slits 1c are formed. Advantageously, the slits 1c are formed directly adjacent to the bands 1b, so as to facilitate the formation of the latter by means of deformation of the material of the plate 1a.

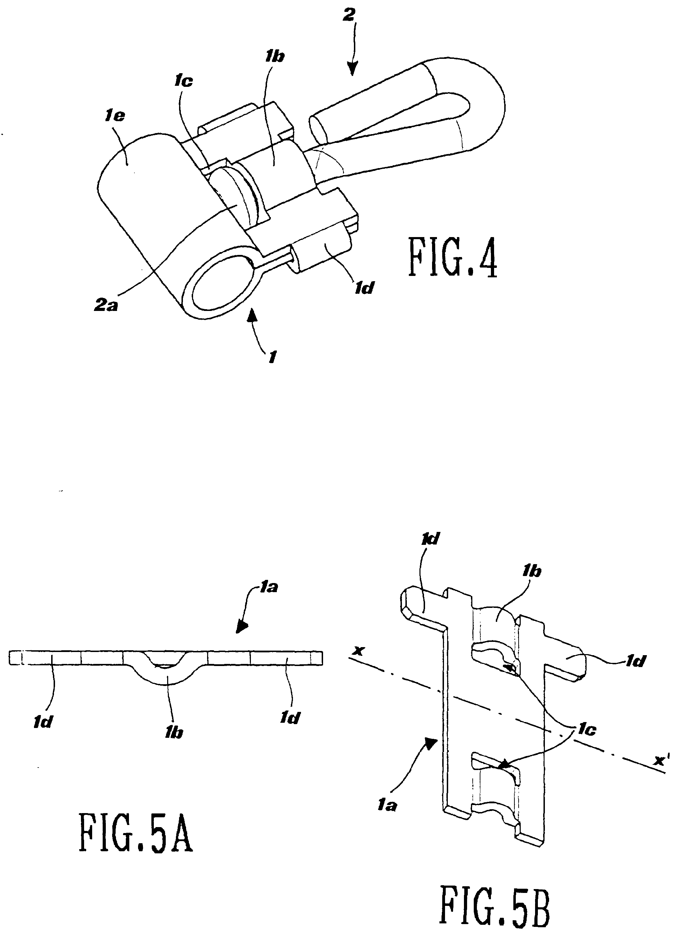

Preferably, the bands 1b and the slits 1c are arranged in opposite pairs on the two sides of a folding axis x-x', as shown in Figs. 5B and 7.

Along the edges of the plate 1a there is also provided at least one tongue 1d - preferably two or more tongues - which is/are integral with the plate and the utility of which will be clarified below.

The hook 2 consists of a metal rod which, at one end, has an enlarged retaining head 2a and which, at the other end, in addition to having a short straight shank section, is bent in the manner of a hook 2b.

Before assembly of the swivel connecting element onto a snow chain, the plate 1a is partially folded about the folding axis x-x' so as to form a fastening sleeve 1e. The sleeve 1e preferably has an internal diameter greater than the diameter of the stranded cable onto which it must be secured, such that it is able to rotate freely about the longitudinal axis of the cable and therefore have an advantageous additional degree of freedom.

During assembly, the hook 2 is received, with its straight shank section, in the concave part of one of the bands 1b and with its enlarged head 2a inside the slit 1c. Then, the plate 1a, which is already partially folded (Fig. 2A), is secured to a metal anchoring cable, for example along a stripped section S of a "strippable" cable 10 of a snow chain, and is then permanently closed onto itself (Fig. 2B), causing the pairs of bands 1b to enclose loosely the straight section of the hook 2. The retaining head 2a of the hook remains confined, freely rotatably, within the slit 1c.

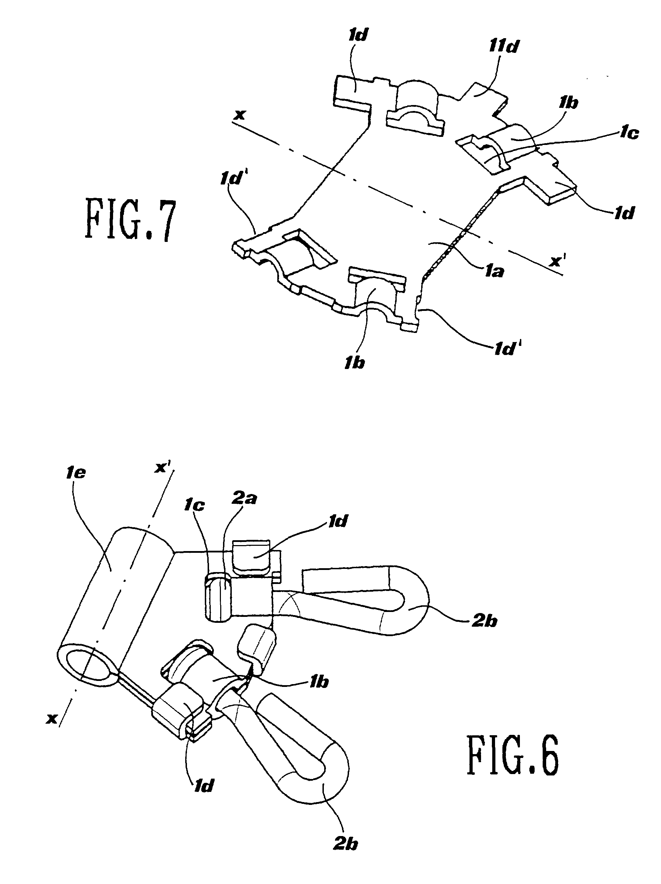

After which, the tongues 1d are closed around the two adjacent edges of the plate until they grip the opposite plate surface (as can be seen in Figs. 4 and 6).

Preferably, the edge of the plate 1a, at the point where each tongue 1d is closed around it, has a notch 1d' (Fig. 7) into which the tongue is inserted, thus achieving better lateral retention thereof and excellent consolidation of the entire body of the swivel connecting element.

Thus closed, the body 1 prevents the hook 2 from coming out, while allowing, as desired, rotation about its longitudinal axis. The sleeve portion 1e of the body 1 is instead firmly secured, freely rotatably, to the metal core of the "strippable" cable 10.

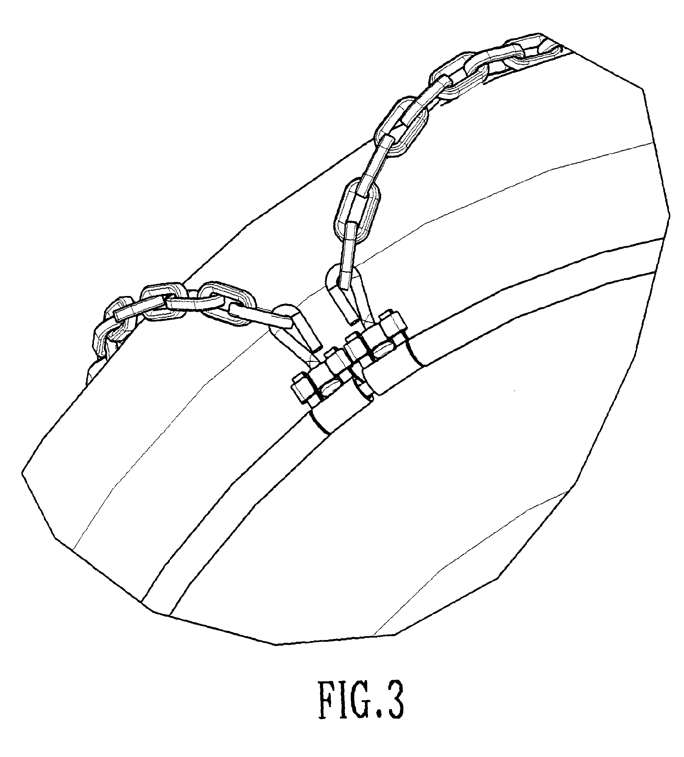

A link of a snow chain section may thus be fixed to the hook 2 and is advantageously free to be oriented into the condition most suited to the specific local conditions (Fig. 3).

Fig. 7 shows a plate 1a which comprises two pairs of bands 1b and which, once closed around the folding axis x-x', is able to retain two hooks 2 (Fig. 6). An additional closing tongue 11d is also provided between the two bands 1b.

With the swivel connecting element according to the invention, the objects mentioned above are therefore fully achieved.

In fact, there is provided a connecting element which allows free rotation of the links fixed thereto, can be easily manufactured and can be secured simply also to a cable of the "strippable" type.

Since the connecting elements according to the invention may be applied directly to a "strippable" cable without the need for insertion in succession, as occurred in snow chains of the known art, the processing time is dramatically reduced since all the swivel connecting elements of the same cable may be applied simultaneously by a bending apparatus designed for this purpose. This therefore also results in an advantageous economy in the manufacture of a snow chain provided with the swivel elements according to the invention.

It is understood, however, that the scope of the invention described above is not limited to the particular embodiment described, but to any other equivalent embodiment within the teaching of the present specification.

For example, although a plate with at least two opposite bands has always been described, it is conceivable that a result of similar utility may also be achieved with a single band which encloses the straight shank section of the hook against a flat opposite surface of the same plate.

Similarly, it is not strictly necessary to deform the body of the swivel element in order to obtain preliminarily a sleeve section, it being possible to fold and close the plate also directly onto the anchoring cable.

Finally, instead of the slit in the plate for freely receiving the enlarged head of the hook, simply a recess in the said plate could be envisaged.

## Claims

1. Connecting element for snow chains, comprising a body portion which can be fixed to an anchoring cable and a hook freely rotatable in said body portion, **characterized in that** said body portion consists of a plate, foldable onto itself along a folding axis and around said cable, provided with at least one raised band and a slit or recess for loosely receiving, respectively, a straight shank portion of said hook and an enlarged head of said hook.

2. Connecting element according to Claim 1, in which said bands are provided in opposite pairs on the two sides of said folding axis.

3. Connecting element according to Claim 1 or 2, in which said slits or recesses are provided in opposite pairs on the two sides of said folding axis.

4. Connecting element according to Claim 1, 2 or 3, in which said plate also has a tongue projecting from a first edge portion and apt to be folded around a second portion of said edge adjacent to said first edge portion when the plate is folded onto itself.

5. Connecting element according to Claim 4, in which said second edge portion of said plate, at the point where it is enclosed by said tongue, has a notch into which the tongue is able to be inserted.

6. Connecting element according to any one of the preceding claims, in which said plate has a deformed sleeve along said folding axis, able to clasp said anchoring cable.

7. Connecting element according to Claim 6, in which said sleeve has an internal diameter greater than the diameter of the anchoring cable in the area where said connecting element is intended to be fastened.

8. Connecting element according to any one of the preceding claims, in which said slit is adjacent to the respective raised band.

9. Snow chain for vehicle tyres, **characterized in that** it comprises swivel connecting elements according to any one of the preceding claims.
